# EUROPÄISCHE PATENTSCHRIFT

(11) **EP 0 908 103 B1**
(45) Veröffentlichungstag und Bekanntmachung des Hinweises auf die Patenterteilung: **29.10.2003**
(21) Anmeldenummer: 98203279.9
(22) Anmeldetag: 29.09.1998
(51) Int. Cl.: A22C 11/02

(54) **Verfahren und Vorrichtung zum Herstellen und Befüllen einer schlauchförmigen Verpackungshülle**
Method and device for making and stuffing of a tubular casing
Procédé et dispositif de fabrication et de bourrage d'une enveloppe tubulaire

(30) Priorität: 06.10.1997 DE 19743977
(43) Veröffentlichungstag der Anmeldung: 14.04.1999
(73) Patentinhaber: Poly-clip System GmbH, 60489 Frankfurt am Main (DE)
(72) Erfinder: Bienert, Olaf, 65529 Waldems (DE); Räke, Fritz, 55595 Hargesheim (DE); Ruschitschka, Ortwin, 64572 Büttelborn (DE)
(74) Vertreter: Eisenführ, Speiser & Partner

(56) Entgegenhaltungen:
- EP-A- 0 068 578
- EP-A- 0 105 558
- EP-A- 0 177 992
- EP-A- 0 568 372
- CH-A- 473 004
- DE-C- 3 608 777

## Beschreibung

Die Erfindung betrifft ein Verfahren zum Herstellen und Befüllen einer schlauchförmigen Verpackungshülle, bei dem ein Puffervorrat an schlauchförmiger Verpackungshülle durch Verbinden zweier Längskanten einer Folienbahn hergestellt und die so gewonnene schlauchförmige Verpackungshülle zum Befüllen aus dem Vorrat abgezogen wird. Außerdem betrifft die Erfindung eine Vorrichtung zum Herstellen einer zu befüllenden schlauchförmigen Verpackungshülle, mit einem Antrieb für den Verpackungshüllenvorschub und einem verschiebbaren Element, dessen Lage von der Größe eines Vorrats bereits hergestellter schlauchförmiger Verpackungshülle abhängt.

Es ist bekannt, eine bereits fertig hergestellte und an einem Ende verschlossene schlauchförmige Verpackungshülle mit dem offenen Ende über das Füllrohr einer Füllmaschine zu stülpen und so auf das Füllrohr aufzuziehen, daß sich auf dem Füllrohr ein Vorrat von schlauchförmiger Verpackungshülle befindet. Die Schlauchhülle wird befüllt, indem Füllgut durch das Füllrohr in die einseitig befüllte Verpackungshülle gepreßt wird, wobei gleichzeitig Hüllenmaterial von dem Vorrat abgezogen wird. Diesem Stand der Technik wohnt der Nachteil inne, daß der auf das Füllrohr aufgezogene Verpackungshüllenvorrat nur begrenzt ist.

Um diesen Nachteil zu vermeiden, kann die schlauchförmige Verpackungshülle während des Befüllens aus einer einfachen Folienbahn hergestellt werden. Dies ist beispielsweise in der EP-B 0 105 558 beschrieben. Dort wird Folienbahn von einer sehr großen Vorratsrolle abgezogen und mittels einer um das Füllrohr herum angeordneten Formschulter zu einem zunächst offenen Schlauch geformt, bei dem die Längskanten der Folienbahn aufeinanderliegen. Anschließend werden die aufeinanderliegenden Längskanten der Folienbahn durch Verschweißen dauerhaft miteinander verbunden, so daß ein Schlauch entsteht, der die zu befüllende schlauchförmige Verpackungshülle bildet. Die Herstellung der schlauchförmigen Verpackungshülle geschieht in einem kontinuierlichen Prozeß und führt zu einem Puffervorrat an schlauchförmiger Verpackungshülle, aus dem die schlauchförmige Verpackungshülle zum Befüllen abgezogen werden kann.

Das Befüllen der Verpackungshülle sowie das Herstellen können gleichzeitig erfolgen. Die Geschwindigkeit, mit der die schlauchförmige Verpackungshülle hergestellt und in den Puffervorrat geschoben wird, ist dabei immer größer als die Geschwindigkeit, mit der die schlauchförmige Verpackungshülle auf der anderen Seite des Puffervorrates beim Befüllen abgezogen wird. Der Puffervorrat ist dabei nichts anderes als die zu einer Raupe gestauchte schlauchförmige Verpackungshülle. Wird der Vorrat zu groß, wird die Herstellung schlauchförmiger Verpackungshülle abgestellt; wird der Vorrat hingegen zu klein, wird die Herstellung der Verpakkungshülle wieder eingeschaltet. Dabei kommt es insbesondere bei der Produktion von langen Schlauchverpackungen, bei der ein Maximum an Schlauchvorrat produziert wird, vor, daß sich durch das Zusammenpressen des Verpackungshüllenschlauches zu einer Raupe Knickstellen in der Verpackungshülle bilden, die z.B. bei Aluminiumverbundfolie zu Bruchstellen führen können.

Die deutsche Offenlegungsschrift DE 195 01 982 betrifft eine Zuführvorrichtung einer diskontinuierlich bandförmiges Material verarbeitenden Maschine, jedoch keine Vorrichtung und damit auch kein Verfahren zum Herstellen und Befüllen einer schlauchförmigen Verpackungshülle. Bei der aus der DE 195 01 982 A1 bekannten Maschine ist eine Materialzuführung von einer Bobine vorgesehen, deren Drehzahl von einem Regelkreis geregelt wird. Die Materialzuführung zum Verarbeitungsort erfolgt über einen Tänzer und einen nachfolgenden Vorschub, der durch den Bedarf einer nachgeordneten Verarbeitungsmaschine angesteuert ist. Sensoren messen kontinuierlich die dem Tänzer zugeführte Materialstrecke und den Materialvorschub. Aus diesen Meßgrößen wird aufgrund des geometrischen Verlaufs der Materialbahn die Tänzerposition berechnet. Ein weiterer Sensor ermittelt die reale Tänzerposition. Als Eingangsgröße des Regelkreises wird die Differenz der gemessenen und berechneten Tänzerposition verwandt. Die gemäß der DE 195 01 982 A1 vorgesehene Regelung und Steuerung ist relativ aufwendig und läßt sich schon allein, weil sie darauf angewiesen ist, die Position eines Tänzers zu erfassen, nicht auf ein Verfahren oder eine Vorrichtung zum Herstellen und Befüllen schlauchförmiger Verpackungshüllen übertragen. Dievorstehend genannten, dieser Erfindung zugrunde liegenden Probleme sind in der DE-OS 195 01 982 A1 weder angesprochen noch gelöst.

Der Erfindung liegt daher die Aufgabe zugrunde, insbesondere die genannten Nachteile zu vermeiden und eine Anlage zu schaffen, die sicherer und rationeller als die bekannte arbeitet.

Diese Aufgabe wird erfindungsgemäß durch ein Verfahren der eingangs genannten Art gelöst, bei dem die Herstellgeschwindigkeit der Verpackungshülle in Abhängigkeit der Abziehgeschwindigkeit eingestellt wird, mit der die schlauchförmige Verpackungshülle aus dem Puffervorrat abgezogen wird. Durch ein derartiges Verfahren wird zum einen vermieden, daß die Herstellung der Verpackungshülle ständig aus- und wieder eingeschaltet wird, wodurch die entsprechende Vorrichtung erheblich weniger belastet wird. Zum anderen ermöglicht es ein solches Verfahren, die Größe des Vorrates klein und in engen Grenzen zu halten, so daß die Verpackungshülle nicht durch übermäßiges Stauchen im Puffervorrat überbeansprucht wird.

Bei einer bevorzugten Ausführungsvariante des Verfahrens wird eine Differenz zwischen der Abzieh- und der Herstellgeschwindigkeit anhand der Größe des Puffervorrates ermittelt. Dieser Verfahrensvariante liegt die Erkenntnis zugrunde, daß der Puffervorrat größer wird, wenn die Herstellgeschwindigkeit größer als die Abziehgeschwindigkeit ist, und schrumpft, wenn die Herstellgeschwindigkeit kleiner als die Abziehgeschwindigkeit ist. Alternativ zu dieser Verfahrensvariante könnte die Abziehgeschwindigkeit beispielsweise auch mit Hilfe einer Meßwalze ermittelt werden, die auf der Schlauchhülle beim Abziehen abrollt und somit mit einer Geschwindigkeit rotiert, die der Abziehgeschwindigkeit entspricht. Das so gewonnene Geschwindigkeitssignal könnte dann zur Steuerung der Herstellgeschwindigkeit ausgewertet werden. Eine Fehlanpassung der Herstellgeschwindigkeit an die Abziehgeschwindigkeit wegen beispielsweise eines systematischen Meßfehlers beim Ermitteln der Abziehgeschwindigkeit ließe sich so allerdings nicht ermitteln, mit der Folge, daß die Herstellgeschwindigkeit tatsächlich ständig größer oder auch kleiner als die Abziehgeschwindigkeit wäre. Im ersten Fall käme es zur Produktionsstörung, weil sich während des Herstellens und Befüllens der Verpackungshülle ein immer größerer Puffervorrat aufbauen würde. Im Falle einer zu geringen Herstellgeschwindigkeit besteht dagegen die Gefahr, daß die Verpakkungshülle beim Befüllen platzt, weil während des Befüllens nicht genügend Verpackungshüllenmaterial nachgezogen werden kann. Diese Probleme werden mit der bevorzugten Verfahrensvariante wirkungsvoll vermieden.

Bei einer bevorzugten Ausgestaltung des Verfahrens wird die Herstellgeschwindigkeit umgekehrt proportional zur Größe des Puffervorrats auf einen Geschwindigkeitswert aus einem kontinuierlichen Wertebereich eingestellt, der auch jede mögliche Abziehgeschwindigkeit enthält. Durch das proportionale Anpassen der Herstellgeschwindigkeit an die Größe des Puffervorrats läßt sich eine sehr genaue und feinfühlige Regelung der Herstellgeschwindigkeit erzielen.

Alternativ zur letztgenannten Verfahrensvariante kann die Herstellgeschwindigkeit auch in Stufen der Größe des Vorrats derart angepaßt werden, daß die Geschwindigkeit um so höher eingestellt wird, je kleiner der Puffervorrat ist und umgekehrt. Ein solches Verfahren, bei dem die Herstellgeschwindigkeit in Stufen verändert wird, läßt sich auf besonders einfache Weise mit Hilfe von einfachen Schaltern ohne proportionale Übertragungsglieder verwirklichen.

Bei einem Verfahren, bei dem die Längskanten der Folienbahn durch Verschweißen verbunden werden, wird vorzugsweise auch die Schweißenergie entsprechend der Herstellgeschwindigkeit in Abhängigkeit der Puffervorratsgröße eingestellt. Bei einem solchen Verfahren sind sowohl die Herstellgeschwindigkeit als auch die Schweißenergie von der Größe des Puffervorrats direkt und damit von der Größe der Abziehgeschwindigkeit indirekt abhängig. Damit wird vermieden, daß es bei kleiner Herstellgeschwindigkeit infolge zu hoher Schweißenergie zu einer übermäßigen Erwärmung der Verpackungshülle kommt, oder umgekehrt bei hoher Herstellgeschwindigkeit und entsprechend zu niedriger Schweißenergie zu keinem oder fehlerhaftem Verschweißen der Verpackungshülle.

Die Lösung der Aufgabe besteht erfindungsgemäß auch in einer Vorrichtung der eingangs genannten Art, die sich dadurch auszeichnet, daß der Antrieb mit einer Geschwindigkeitssteuerung versehen ist. Der Vorteil einer derartigen Vorrichtung liegt klar auf der Hand: Der Antrieb für den Verpackungshüllenvorschub bestimmt die Herstellgeschwindigkeit; wenn diese steuerbar ist, kann sie an die Abziehgeschwindigkeit angepaßt werden, so daß sich mit einer solchen Vorrichtung das erfindungsgemäße Verfahren durchführen läßt.

Bei einer bevorzugten Ausführungsform der Vorrichtung weist diese mindestens einen Sensor auf, der mit der Geschwindigkeitssteuerung verbunden ist, und bei der an dem verschiebbaren Element eine keilförmige Bedämpfungsfahne angebracht ist, die durch Verschieben des Elementes über den Sensor bewegbar ist. Mit einer solchen Vorrichtung läßt sich ein der Größe des Puffervorrats proportionaler Wert ermitteln, der bei der Durchführung des erfindungsgemäßen Verfahrens zur Steuerung der Herstellgeschwindigkeit ausgewertet werden kann.

Eine ebenso bevorzugte alternative Vorrichtung zeichnet sich dadurch aus, daß sie mehrere ortsfeste, in Bewegungsrichtung des Elementes hintereinander angeordnete Näherungsschalter aufweist, die mit der Geschwindigkeitssteuerung verbunden sind, und daß an dem verschiebbaren Element eine Bedämpfungsfahne angebracht ist, die durch Verschieben des Elementes entlang der Näherungsschalter bewegbar ist. Mit einer solchen Vorrichtung läßt sich die Größe des Vorrates zwar nicht kontinuierlich, sondern in Stufen ermitteln. Dies reicht aber aus, um die Herstellgeschwindigkeit entsprechend in Stufen an die Abziehgeschwindigkeit anzupassen. Die Vorrichtung läßt sich insbesondere einfacher verwirklichen, als die vorbeschriebene Ausführungsvariante, ermöglicht aber keine so genaue Regelung der Herstellgeschwindigkeit, wie letztere.

Das Verfahren und die Vorrichtung sollen nun anhand zweier Ausführungsvarianten näher erläutert werden. Dem dient auch die Zeichnung, deren Figuren:
- Fig. 1: eine Seitenansicht einer Vorrichtung zum Herstellen und Befüllen schlauchförmiger Verpackungshüllen;
- Fig. 2: einen vergrößerten Ausschnitt aus Fig. 1 mit einer Anordnung zum Ermitteln der Puffervorratsgröße;
- Fig. 3: ein Detail der Anordnung aus Fig. 2, nämlich eine keilförmige Bedämpfungsfahne und ein Sensor; und
- Fig. 4: eine alternative Sensoranordnung zu der in Fig. 3 abgebildeten im Detail zeigt.

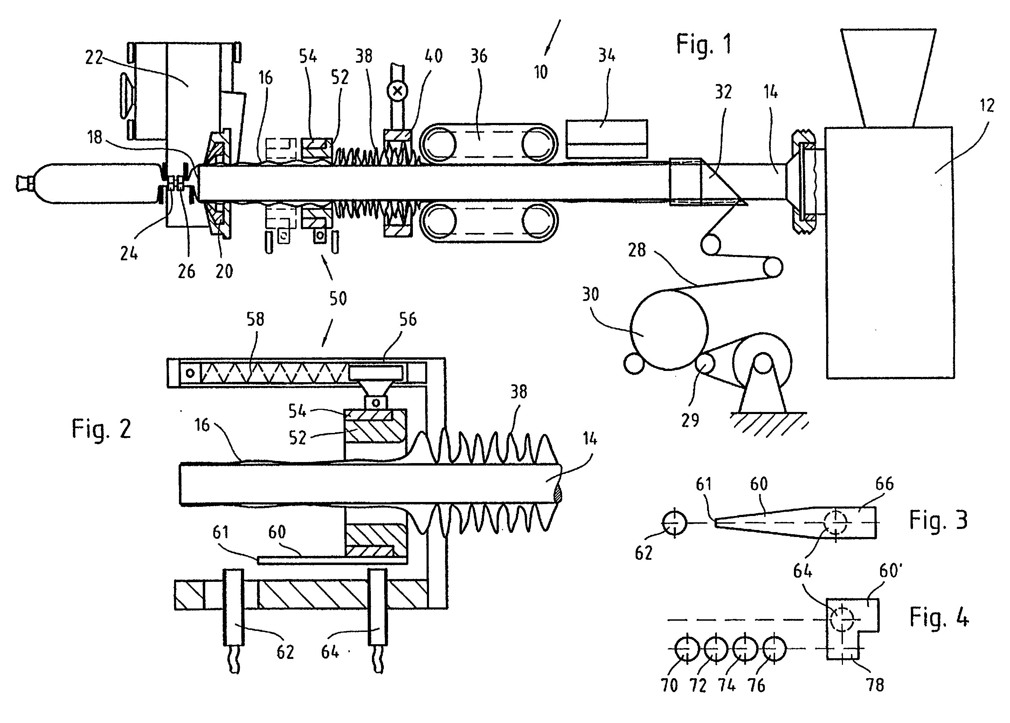

Die in Fig. 1 abgebildete Vorrichtung 10 zum Herstellen und Befüllen schlauchförmiger Verpackungshüllen weist eine Füllmaschine 12 auf, aus der Füllgut durch ein Füllrohr 14 in eine einseitig verschlossene Verpackungshülle 16 gepreßt wird.

Die zu befüllende schlauchförmige Verpackungshülle 16 ist auf die Mantelfläche des Füllrohres 14 aufgezogen und wird - weil sie an ihrem vor der Mündungsöffnung 18 des Füllrohres 14 befindlichen einen Ende verschlossen ist - beim Befüllen kontinuierlich von der Füllrohrmantelfläche abgezogen. Diesem Abziehen der Verpackungshülle 16 wirkt eine Darmbremse 20 entgegen. Dadurch erhöht sich die zum Abziehen der Verpackungshülle 16 erforderliche und über den Fülldruck aufzubringende Kraft, mit dem Ergebnis, daß der Fülldruck entsprechend hoch ist und zu einer prallen Verpackung mit dem gewünschten Innendruck führt. Wenn eine Packung ausreichend befüllt ist, wird sie an ihrem zweiten Ende von einer Verschließmaschine 22 mit zwei Verschlußklammern 24 und 26 verschlossen. Danach wird die Verpackungshülle zwischen den beiden Verschlußklammern durchtrennt, so daß sich wiederum ein verschlossenes Ende eines bisher noch nicht befüllten Verpackungshüllenabschnitts vor der Füllrohrmündung 18 befindet und auf die beschriebene Weise befüllt werden kann. Es ergibt sich, daß die Verpackungshülle 16 zwar während des Befüllens einer Verpackung mit mehr oder weniger konstanter Geschwindigkeit von der Mantelfläche des Füllrohres 14 abgezogen wird, daß diese Abziehgeschwindigkeit aber zumindest beim Verschließen der Verpakkungsenden stark schwankt und zeitweise auf Null zurückgeht.

Um auf die zuvor beschriebene Weise kontinuierlich Verpackungshüllenmaterial von der Mantelfläche des Füllrohres 14 abziehen zu können, weist die Vorrichtung 10 eine Einrichtung auf, mit der eine Folienbahn 28 von einer mit eigenem Antrieb 29 versehenen Folienrolle 30 abgezogen und mittels einer um das Füllrohr 14 herum angeordneten Formschulter 32 zu einem zunächst offenen Schlauch geformt werden kann, bei dem die Längskanten der Folienbahn aufeinanderliegen. Anschließend werden die aufeinanderliegenden Längskanten der Folienbahn 28 mittels einer Schweißeinrichtung 34 dauerhaft miteinander verbunden, so daß um die Mantelfläche des Füllrohres 14 herum ein Schlauch entsteht, der die zu befüllende schlauchförmige Verpackungshülle bildet. Der so entstehende Verpackungshüllenschlauch wird dann von einem dem Vorschub dienenden Antrieb 36 kontinuierlich weiterbefördert, so daß er sich hinter dem Vorschubantrieb 36 staut und zur Raupe gestaucht wird, die einen Puffervorrat 38 darstellt, aus dem die Verpackungshülle 16 dann zum Befüllen abgezogen wird. Auf diese Weise kann die Verpackungshülle 16 gleichzeitig hergestellt und in einem anderen Abschnitt befüllt werden. Dabei wird neu hergestellte Verpackungshülle 16 dem Puffervorrat von der einen (in der Zeichnung der rechten) Seite zugeführt, während gleichzeitig auf der anderen (in der Zeichnung der linken) Seite die Verpackungshülle aus dem Puffervorrat 38 abgezogen wird.

Es ist klar, daß der Puffervorrat 38 größer wird, wenn die Vorschubgeschwindigkeit, mit der die frisch hergestellte Verpackungshülle 16 vom Vorschubantrieb 36 vorgeschoben wird, und größer ist, als die Geschwindigkeit, mit der die Verpakkungshülle 16 beim Befüllen von dem Puffervorrat 38 abgezogen wird. Umgekehrt wird der Puffervorrat 38 kleiner, wenn die Vorschubgeschwindigkeit des Antriebs 36, die gleichzeitig die Herstellgeschwindigkeit für die Verpackungshülle 16 ist, kleiner ist als die Abziehgeschwindigkeit beim Befüllen der Verpackungshülle 16.

Da die Größe des Puffervorrats 38 je nach Differenz zwischen Abzieh- und Herstellgeschwindigkeit wächst oder schrumpft, kann aus der Größe des Puffervorrats 38 ein Signal abgeleitet werden, mit dem eine Geschwindigkeitssteuerung für den Antrieb 36 derart beeinflußt wird, daß die Geschwindigkeit des Antriebs 36 bei wachsendem Puffervorrat 38 abnimmt und bei sinkendem Puffervorrat 38 zunimmt. Auf diese Weise kann die Herstellgeschwindigkeit so geregelt werden, daß sie der Abziehgeschwindigkeit im Rahmen der Regelgenauigkeit entspricht.

Nur der Vollständigkeit halber sei erwähnt, daß die frisch verschweißte Verpakkungshülle 16 von einer Kühleinrichtung 40 mit einem kühlenden und/oder reibungsvermindernden Medium benetzt wird. Die Kühleinrichtung 40 ist so angeordnet, daß sie die Verpackungshülle 16 dann kühlt, wenn sie von dem Vorschubantrieb 36 in den Puffervorrat 38 gefördert wird.

Der Ermittlung der Puffervorratsgröße dient eine Meßeinrichtung 50, die sowohl in Fig. 1 als auch in Fig. 2 - dort in einem vergrößerten Ausschnitt - abgebildet ist. Die Meßeinrichtung 50 weist einen Anschlag 52 auf, dessen Innendurchmesser größer ist als der des Füllrohres 14 samt gestreckt aufliegender Verpackungshülle 16, aber kleiner ist als der Außendurchmesser des Puffervorrats 38, d.h. der Außendurchmesser der gestauchten Verpackungshülle 16. Der Anschlag 52 wird in einer Aufnahme 54 gehalten, die wiederum in einer Führung 56 gegen die Rückstellkraft einer Feder 58 in Längsrichtung des Füllrohres 14 verschiebbar gelagert ist. Der Anschlag 52 ist an der Aufnahme 54 so befestigt, daß er leicht durch andere Anschläge ausgetauscht werden kann, um auf diese Weise den Anschlag 52 an Füllrohre mit unterschiedlichem Außendurchmesser anpassen zu können.

An der Aufnahme 54 ist außerdem eine Bedämpfungsfahne 60 befestigt. Sie ist somit zusammen mit der Aufnahme 54 und dem Anschlag 52 in Füllrohrlängsrichtung verschiebbar. Die Bedämpfungsfahne 60 ist parallel zum Verschiebeweg längsgestreckt und hat eine in der Aufsicht (Fig. 3) keilförmige Form, d.h. ihre Breite nimmt ausgehend von einem schmalen vorderen Ende 61 bis auf einen Maximalwert zu.

Ein an der Meßeinrichtung befestigter Analogsensor 62 ist so angeordnet, daß er zumindest in Teilbereichen des Verschiebeweges der keilförmigen Bedämpfungsfahne 60 von dieser bedämpft wird, um so aufgrund der Keilform der Bedämpfungsfahne einen analogen Meßwert zu liefern, aus dem sich die Relativposition der Bedämpfungsfahne - die dem aktuellen Verschiebeweg des Anschlages 52 entspricht - eindeutig bestimmen zu können. Außerdem weist die Meßeinrichtung 50 einen Näherungsschalter 64 auf, der so angeordnet ist, daß er aktiv ist, wenn sich der Anschlag 52 in einem ersten Teilverschiebebereich des gesamten Verschiebeweges befindet.

Solange die Meßeinrichtung 50 vom Puffervorrat 38 unbeeinflußt ist, wird der Anschlag 52 samt Aufnahme 54 und Bedämpfungsfahne 60 von der Rückstellfeder 58 in der in Fig. 2 abgebildeten Ausgangsposition gehalten, in der die Bedämpfungsfahne 60 den Näherungsschalter 64 auslöst. Wenn beim Herstellen der schlauchförmigen Verpackungshülle 16 der aus der zur Raupe gestauchten Verpackungshülle 16 bestehende Puffervorrat 38 entsteht und wächst, erreicht das vordere Ende des Puffervorrats 38 - von dem die Verpackungshülle beim Befüllen auch abgezogen wird - ab einer bestimmten Puffervorratsgröße den Anschlag 52. Mit größer werdendem Puffervorrat 38 schiebt der Puffervorrat 38 den Anschlag 52 gegen die Rückstellkraft der Feder 58 vor sich her. Solange sich der Anschlag 52 dabei in seinem ersten Teilverschiebebereich bewegt, ist der Näherungsschalter 64 aktiv. Wird der Anschlag 52 vom Puffervorrat 38 weitergeschoben, verläßt er den ersten Teilverschiebebereich mit der Folge, daß der Näherungsschalter 64 inaktiv wird.

Beim Verschieben des Anschlages 52 durch den Puffervorrat 38 gerät außerdem das vordere schmale Ende 61 der keilförmigen Bedämpfungsfahne 60 in den Erfassungsbereich des Analogsensors 62, der damit geringförmig bedämpft wird und ein entsprechendes Meßsignal abgibt. Wird der Anschlag 52 mit wachsendem Puffervorrat 38 weiterbewegt, wächst das im Erfassungsbereich des Analogsensors 62 befindliche Volumen der keilförmigen Bedämpfungsfahne 60, so daß der Analogsensor 62 um so stärker bedämpft wird, je weiter der Anschlag 52 vom Puffervorrat 38 verschoben wird. Mit zunehmender Bedämpfung des Analogsensors 62 ändert sich das von ihm abgegebene Meßsignal, so daß das jeweilige Meßsignal ein Maß für den Verschiebeweg des Anschlages 52 und damit für die Größe des Puffervorrates 38 ist. Über die so ermittelte Puffervorratsgröße wird die Vorschubgeschwindigkeit und damit die Herstellgeschwindigkeit mittelbar so geregelt, daß sie der Abziehgeschwindigkeit entspricht.

Der Analogsensor 62 ist in einem parallel zur Füllrohrlängsrichtung und damit parallel zum Verschiebeweg des Anschlags 52 ausgerichteten Langloch befestigt und kann so zum Justieren der Meßeinrichtung 50 in verschiedenen, parallel zum Füllrohr 14 verschobenen Positionen befestigt werden.

Fig. 3 zeigt die Bedämpfungsfahne 60 sowie den Analogsensor 62 und den Näherungsschalter 64 in einer Draufsicht. Die Bedämpfungsfahne 60 befindet sich dabei in ihrer von der Ausgangslage des Anschlags 52 festgelegten Relativposition zu dem Analogsensor 62 bzw. dem Näherungsschalter 64. Wird der Anschlag 52 aus dieser Ausgangsposition heraus verschoben, ändert sich die Position der Bedämpfungsfahne 60 mit Bezug auf Fig. 3 dahingehend, daß sich die Bedämpfungsfahne 60 relativ zu dem Analogsensor 62 und dem Näherungsschalter 64 nach links bewegt. Das vordere Ende 61 der Bedämpfungsfahne 60 bewegt sich dabei immer mehr auf den Analogsensor 62 zu und gerät schließlich in dessen Erfassungsbereich. Da die Breite der Bedämpfungsfahne 60 in der Draufsicht ausgehend vom vorderen Ende 61 immer mehr zunimmt, wird die in den Erfassungsbereich des Analogsensors 62 geratene Fläche der Bedämpfungsfahne 60 um so größer, je weiter diese nach links verschoben wird. Entsprechend wächst auch das in den Erfassungsbereich des Analogsensors 62 geratene Volumen der keilförmigen Bedämpfungsfahne 60, was zu einer stärkeren Bedämpfung des Analogsensors 62 und einem entsprechenden Meßsignal führt. Das Meßsignal ist ein Spannungswert, der mit zunehmender Bedämpfung des Analogsensors 62 abnimmt. Der Spannungswert dient als Steuersignal für die Steuerung der Geschwindigkeit des Vorschubantriebs 36. Da diese Steuerung Drehzahlregler für den Vorschubantrieb 36 einschließt, entspricht der von dem Analogsensor 62 abgegebene Meßwert auch einer Führungsgröße für den Drehzahlregler des Vorschubantriebs 36.

Aus Fig. 3 geht auch hervor, daß die Breite der Bedämpfungsfahne 60 in einem hinteren Bereich 66 nicht mehr zunimmt. Der hintere Bereich 66 deckt im ersten Teilverschiebebereich des Anschlags 52 den Näherungsschalter 64 ab und löst ihn auf diese Weise aus. Damit ist der Näherungsschalter 64 im ersten Teilverschiebebereich des Anschlags 52 ständig aktiv. Erst wenn die Bedämpfungsfahne 60 bezogen auf Fig. 3 weiter nach links aus dem ersten Teilverschiebebereich heraus verschoben wird, gibt sie den Näherungsschalter 64 frei, so daß dieser inaktiv wird.

Nachdem nun die einzelnen Bestandteile der in Fig. 1 abgebildeten Anlage zum Herstellen und Befüllen von Verpackungshüllen bezüglich ihres Aufbaus und ihrer Funktionsweise beschrieben wurden, soll nun die Wirkungsweise der Gesamtanlage beschrieben werden:

Zu Beginn des Betriebes werden der Vorschubantrieb 36, die Schweißeinrichtung 34 und der Folienrollenantrieb 29 mittels eines nicht dargestellten Schalters gleichzeitig eingeschaltet. Damit beginnt die Herstellung der schlauchförmigen Verpakkungshülle 16, die von dem Vorschubantrieb 36 auf dem Füllrohr 14 in Richtung der Darmbremse 20 geschoben wird. Vor dem Vorschubantrieb 36 staut sich die Verpackungshülle 16 zur Raupe und bildet den Puffervorrat 38. Mit wachsendem Puffervorrat 38 erreicht das vordere Ende des Puffervorrats 38 den Anschlag 52, der mit wachsendem Puffervorrat 38 vor diesem hergeschoben wird. Dabei verläßt die keilförmige Bedämpfungsfahne 60 zusammen mit dem Anschlag 52 ihre Ausgangsposition und gibt beim Verlassen des ersten Teilverschiebebereichs, wenn bereits ein bestimmter Puffervorrat an schlauchförmiger Verpackungshülle 16 produziert ist, den induktiven Näherungsschalter 64 frei. Durch das dabei von dem Näherungsschalter 64 abgegebene Signal wird die Schlauchherstellanlage, d.h. der Vorschubantrieb 36, die Schweißeinrichtung 34 und der Folienrollenantrieb 29, abgeschaltet. Gleichzeitig werden die vorgeschaltete Füllmaschine 12 und die nachgeschaltete Verschließmaschine 22 betriebsbereit geschaltet. Damit ist die

Gesamtanlage produktionsbereit; sie kann durch Betätigen eines entsprechenden Schalters eingeschaltet werden.

Wird die Anlage eingeschaltet, beginnt zum einen das Befüllen der Verpackungshülle 16 auf die vorbeschriebene Weise, wobei gleichzeitig Verpackungshüllenmaterial aus dem Puffervorrat 38 abgezogen wird. Auch die Herstellung der schlauchförmigen Verpackungshülle 16 beginnt, indem der Vorschubantriebs 36, die Schweißeinrichtung 34 und der Folienrollenantrieb 29 wieder eingeschaltet werden. Die hergestellte Verpackungshülle 16 wird dabei in den Puffervorrat 38 geschoben, und zwar zunächst mit einer Geschwindigkeit, die etwas größer ist als diejenige, mit der die Verpackungshülle 16 beim Befüllen aus dem Puffervorrat 38 abgezogen wird. Der Puffervorrat 38 wächst somit zunächst. Dabei wird - wie bereits beschrieben - der Anschlag 52 mit Bezug auf die Zeichnung nach links verschoben. Sobald das vordere Ende 61 der keilförmigen Bedämpfungsfahne 60 in den Erfassungsbereich des Analogsensors 62 gerät, entsprechen die von dem Analogsensor 62 abgegebenen Signale aufgrund der zuvor beschriebenen Zusammenhänge einer bestimmten Puffervorratsgröße. Das analoge Meßsignal wird einer nicht dargestellten Steuereinrichtung für die Geschwindigkeit des Vorschubantriebs 36 zugeführt. Konkret gibt der Analogsensor 62 eine Spannung ab, die abhängig von der Größe derjenigen Fläche der keilförmigen Bedämpfungsfahne 60 ist, die im Erfassungsbereich des Analogsensors 62 liegt. Diese Spannung wird direkt auf einen Frequenzumrichter, der Teil der Steuereinrichtung ist, gegeben. Das von dem Analogsensor 62 abgegebene Spannungssignal wird von dem Frequenzumrichter in ein Signal einer entsprechenden Frequenz umgewandelt. Die von dem Frequenzumrichter abgegebene Frequenz gibt eine Drehzahl für den Vorschubantrieb 36 und die von der Schweißeinrichtung 34 abzugebende Schweißenergie vor.

Gibt der Analogsensor 62 ein Meßsignal ab, das einer über einem Mittelwert liegenden Puffervorratsgröße entspricht, wird die Geschwindigkeit des Vorschubantriebs 36 und damit die Herstellgeschwindigkeit entsprechend reduziert. Steht das der Steuereinrichtung vom Analogsensor 62 zugegangene Signal dagegen für eine Puffervorratsgröße unterhalb eines Mittelwerts, wird die Herstellgeschwindigkeit erhöht. Im Idealfall ohne Regelabweichung behält der Puffervorrat 38 seine mittlere Größe und die Herstellgeschwindigkeit entspricht genau der Geschwindigkèit, mit der die Verpackungshülle 16 aus dem Puffervorrat 38 abgezogen wird. Solange das vordere Ende 61 der Bedämpfungsfahne 60 den Erfassungsbereich des Analogsensors 62 noch nicht erreicht hat, arbeitet der Vorschubantrieb 36 mit maximaler Geschwindigkeit. Wenn der Puffervorrat 38 hingegen eine bestimmte Größe überschreitet, bei der der Analogsensor 62 über ein einstellbares Höchstmaß hinaus bedämpft wird, wird der Vorschubantrieb 36 abgeschaltet. Dies kommt jedoch bei kontinuierlicher Produktion nicht vor; es stellt sich vielmehr der zuvor beschriebene Zustand einer mittleren Puffervorratsgröße ein, bei der die Herstellgeschwindigkeit der Abziehgeschwindigkeit entspricht.

Bei Störungen, wie beispielsweise dem Abreißen der Folie bei der Schlauch-Herstellung wird der Puffervorrat 38 so weit aufgebraucht, bis die Bedämpfungsfahne 60 den Näherungsschalter 64 wieder aktiviert, woraufhin die Gesamtanlage abgeschaltet wird.

Fig. 4 zeigt, daß sich anstelle eines Analogsensors 62 auch mehrere in Füllrohrlängsrichtung hintereinandergestaffelte Näherungsschalter 70 bis 76 zur Ermittlung der Puffervorratsgröße verwenden lassen. Die Näherungsschalter 70 bis 76 sind dabei so angeordnet, daß sie von einem Schaltabschnitt 78 einer alternativen Bedämpfungsfahne 60' der Reihe nach erst aktiviert und dann deaktiviert werden, wenn die Bedämpfungsfahne 60' zusammen mit dem Anschlag 62 bei wachsendem Puffervorrat 38 vorgeschoben wird. Ist einer der Näherungsschalter 70 bis 76 aktiviert, entspricht dies einer bestimmten Puffervorratsgröße. Die Aktivierung zweier benachbarter Näherungsschalter läßt auch das Erkennen von dazwischenliegenden Puffervorratsgrößen zu. Die Näherungsschalter 70 bis 76 sind mit der Steuerung für den Vorschubantrieb 36 verbunden, mit dem die Vorschubgeschwindigkeit erhöht wird, wenn die Puffervorratsgröße unter einem Mittelwert liegt, und verkleinert wird, wenn die Puffervorratsgröße über einem Mittelwert liegt. Da die Erfassung der Puffervorratsgröße nur in Stufen geschieht, erfolgt auch die Anpassung der Herstellgeschwindigkeit in Stufen. Die Näherungsschalter bilden zusammen eine Art mehrstufigen Schalter, bei dem jede Schaltstufe einer bestimmten Vorschubgeschwindigkeit entspricht. Entspricht dabei die Abziehgeschwindigkeit keiner der Stufen für die Herstellgeschwindigkeit, wird die Herstellgeschwindigkeit ständig zwischen zwei Werten hin- und hergeschaltet, von denen einer größer als die Abziehgeschwindigkeit ist und der andere kleiner. Dabei bewegt sich der Schaltabschnitt 78 der Bedämpfungsfahne 60' ständig zwischen zwei Näherungsschaltern zum Umschalten der Herstellgeschwindigkeit hin und her.

## Patentansprüche

1. Verfahren zum Herstellen und Befüllen einer schlauchförmigen Verpackungshülle (16), bei dem ein Puffervorrat (38) an schlauchförmiger Verpackungshülle (16) durch Verbinden zweier Längskanten einer Folienbahn (30) hergestellt und die so gewonnene schlauchförmige Verpackungshülle (16) beim Befüllen aus dem Puffervorrat (38) abgezogen wird,
**dadurch gekennzeichnet, daß** die Herstellgeschwindigkeit der Verpackungshülle in Abhängigkeit der Abziehgeschwindigkeit eingestellt wird, mit der die schlauchförmige Verpackungshülle (16) aus dem Puffervorrat (38) abgezogen wird.

2. Verfahren nach Anspruch 1,
**dadurch gekennzeichnet, daß** eine Differenz zwischen Abzieh- und Herstellgeschwindigkeit anhand der Größe des Puffervorrats (38) ermittelt wird.

3. Verfahren nach Anspruch 2,
**dadurch gekennzeichnet, daß** die Herstellgeschwindigkeit umgekehrt proportional zur Größe des Puffervorrats auf einen Geschwindigkeitswert aus einem kontinuierlichen Wertebereich eingestellt wird, in den auch jede mögliche Abziehgeschwindigkeit fällt.

4. Verfahren nach Anspruch 2,
**dadurch gekennzeichnet, daß** die Herstellgeschwindigkeit in Stufen der Größe des Puffervorrats (38) derart angepaßt wird, daß die Geschwindigkeit um so höher eingestellt wird, je kleiner der Puffervorrat (38) ist, und umgekehrt.

5. Verfahren nach einem der Ansprüche 1 bis 4, bei dem die Längskanten der Folienbahn (30) durch Verschweißen verbunden werden,
**dadurch gekennzeichnet, daß** die Schweißenergie entsprechend der Herstellgeschwindigkeit in Abhängigkeit der Puffervorratsgröße eingestellt wird.

6. Vorrichtung zum Herstellen und Befüllen einer schlauchförmigen Verpakkungshülle (16) mit einem Antrieb (36) für den Verpackungshüllenvorschub und einem verschiebbaren Element (52), dessen Lage von der Größe eines Puffervorrats (38) bereits hergestellter schlauchförmiger Verpackungshülle (16) abhängt,
**dadurch gekennzeichnet, daß** der Antrieb (36) miteiner Geschwindigkeitssteuerung versehen ist, so daß die Herstellgeschwindigkeit der Verpackungshülle in Abhängigkeit der Abziehgeschwindigkeit einstellbar ist, mit der die schlauchförmige Verpackungshülle aus dem Puffervorrat abgezogen wird.

7. Vorrichtung nach Anspruch 6,
**dadurch gekennzeichnet, daß** die Vorrichtung mindestens einen ortsfesten Sensor (62) aufweist, der mit der Geschwindigkeitssteuerung verbunden ist, und daß an dem verschiebbaren Element (52) eine keilförmige Bedämpfungsfahne (60) angebracht ist, die durch Verschieben des Elementes (52) über den Sensor (62) bewegbar ist.

8. Vorrichtung nach Anspruch 6,
**dadurch gekennzeichnet, daß** die Vorrichtung mehrere ortsfeste, in Bewegungsrichtung des Elementes (52) hintereinander angeordnete Näherungsschalter (70, 72, 74, 76) aufweist, die mit der Geschwindigkeitssteuerung verbunden sind, und daß an dem verschiebbaren Element eine Bedämpfungsfahne (60') angebracht ist, die durch Verschieben des Elementes entlang der Näherungsschalter (70, 72, 74, 76) bewegbar ist.

## Claims

1. A method for producing and filling a tubular packaging casing (16), in which a buffer store (38) of tubular casing (16) is produced by joining two long edges of a film web (30) and the tubular casing (16) thus obtained is withdrawn from the buffer store (38) during filling,
**characterised in that** the speed of production of the casing is set dependent on the take-off speed with which the tubular casing (16) is withdrawn from the buffer store (38).

2. A method according to Claim 1, **characterised in that** a difference is determined between the take-off speed and the production speed using the size of the buffer store (38).

3. A method according to Claim 2, **characterised in that** the production speed is set inversely proportionally to the size of the buffer store to a speed value from a continuous value range into which any possible take-off speed also falls.

4. A method according to Claim 2, **characterised in that** the production speed is adapted in steps to the size of the buffer store (38) such that the speed is set all the higher the smaller the buffer store (38) is, and vice versa.

5. A method according to one of Claims 1 to 4, in which the long edges of the film web (30) are joined by bonding, **characterised in that** the bonding energy is adjusted corresponding to the production rate dependent on the size of the buffer store.

6. An apparatus for producing and filling a tubular casing (16), with a drive (36) for advancing the casing and a displaceable element (52), the position of which depends on the size of a buffer store (38) of already-produced tubular casing (16), **characterised in that** the drive (36) is provided with a speed control so that the production speed of the casing is adjustable dependent on the take-off speed at which the tubular casing is withdrawn from the buffer store.

7. An apparatus according to Claim 6, **characterised in that** the apparatus has at least one fixed sensor (62) which is connected to the speed control, and that a wedge-shaped damping flag (60) is attached to the displaceable element (52), which flag can be moved across the sensor (62) by displacing the element (52).

8. An apparatus according to Claim 6, **characterised in that** the device has a plurality of fixed proximity switches (70, 72, 74, 76) arranged in series in the direction of movement of the element (52), which switches are connected to the speed control, and that a damping flag (60') is attached to the displaceable element, which flag can be moved along the proximity switches (70, 72, 74, 76) by displacing the element.

## Revendications

1. Procédé de fabrication d'une enveloppe (16) en forme de boyau et d'embossage dans celle-ci, dans lequel on produit une réserve (38) tampon d'enveloppe (16) en forme de boyau par liaison de deux bords longitudinaux d'une bande (30) en forme de feuille et, lors de l'embossage, on retire l'enveloppe (16) en forme de boyau ainsi obtenue de la réserve (38) tampon,
**caractérisé en ce que** l'on règle la vitesse de fabrication de l'enveloppe en fonction de la vitesse de retrait à laquelle l'enveloppe (16) en forme de boyau est retirée de la réserve (38) tampon.

2. Procédé suivant la revendication 1,**caractérisé en ce que** l'on détermine la différence entre la vitesse de retrait et la vitesse de fabrication au moyen de la dimension de la réserve (38) tampon.

3. Procédé suivant la revendication 2,**caractérisé en ce que** l'on règle la vitesse de fabrication de manière inversement proportionnelle à la dimension de la réserve tampon à une valeur de la vitesse dans un domaine de valeurs continues, dans lequel tombe aussi chaque vitesse de retrait éventuelle.

4. Procédé suivant la revendication 2,**caractérisé en ce que** l'on adapte la vitesse de fabrication par paliers à la dimension de la réserve (38) tampon, de façon à ce que la vitesse soit d'autant plus grande que la réserve (38) tampon est plus petite et inversement.

5. Procédé suivant l'une des revendications 1 à 4, dans lequel on relie les bords longitudinaux de la bande (30) en forme de feuille par soudage,
**caractérisé en ce que** l'on règle l'énergie de soudage correspondant à la vitesse de fabrication en fonction de la dimension de la réserve tampon.

6. Dispositif de fabrication d'une enveloppe (16) en forme de boyau et d'embossage dans celle-ci, comprenant un dispositif (36) d'entraînement pour l'avance de l'enveloppe et un élément (52) qui peut coulisser et dont la position dépend de la dimension d'une réserve (38) tampon d'enveloppe (16) en forme de boyau déjà fabriquée, **caractérisé en ce que** le dispositif (36) d'entraînement est muni d'une commande de vitesse de façon à pouvoir régler la vitesse de fabrication de l'enveloppe en fonction de la vitesse de retrait à laquelle l'enveloppe en forme de boyau est retirée de la réserve tampon

7. Dispositif suivant la revendication 6, **caractérisé en ce que** le dispositif comprend au moins un capteur (62) poste fixe qui est relié à la commande de vitesse et **en ce qu'**il est prévu sur l'élément (52) coulissant un talon (60) d'amortissement cunéiforme qui peut être déplacé par le coulissement de l'élément (52) par l'intermédiaire du capteur (62).

8. Dispositif suivant la revendication 6, **caractérisé en ce que** le dispositif comporte plusieurs interrupteurs (70, 72, 74, 76) de proximité disposés à poste fixe l'un derrière l'autre dans la direction de déplacement de l'élément (52) et reliés à la commande de vitesse et **en ce qu'**il est prévu sur l'élément coulissant un talon (60') d'amortissement, qui peut être déplacé par le coulissement de l'élément le long des interrupteurs (70, 72, 74, 76) de proximité.
